# EUROPEAN PATENT SPECIFICATION

(11) **EP 2 186 010 B1**
(45) Date of publication and mention of the grant of the patent: **06.04.2011**
(21) Application number: 08774746.5
(22) Date of filing: 03.07.2008
(51) Int. Cl.: G06F 13/24

(54) **ELECTRONIC DEVICE WITH CPU AND INTERRUPT RELAY STAGE**
ELEKTRONISCHE ANORDNUNG MIT CPU UND INTERRUPT-RELAISSTUFE
DISPOSITIF ÉLECTRONIQUE À UNITÉ CENTRALE ET ÉTAGE DE RELAIS D'INTERRUPTION

(30) Priority: 06.07.2007 DE 102007031529; 26.12.2007 US 16728; 26.06.2008 US 146634
(43) Date of publication of application: 19.05.2010
(73) Proprietor: TEXAS INSTRUMENTS DEUTSCHLAND GMBH, 85356 Freising (DE)
(72) Inventor: SCHREINER, Joerg, 82256 Fuerstenfeldbruck (DE)
(74) Representative: Holt, Michael
(86) International application number: PCT/EP2008/058634
(87) International publication number: WO 2009/007309

(56) References cited:
- WO-A-02/093391
- US-A- 5 551 044
- ENGLAND D ED - SCHRADER M E ET AL: "A /spl mu/Watt postage stamp PC" ASIC CONFERENCE 1998. PROCEEDINGS. ELEVENTH ANNUAL IEEE INTERNATIONAL ROCHESTER, NY, USA 13-16 SEPT. 1998, NEW YORK, NY, USA,IEEE, US, 13 September 1998 (1998-09-13), pages 139-143, XP010309705 ISBN: 978-0-7803-4980-3

## Description

### FIELD OF THE INVENTION

The field of this invention is an electronic device with a central processing unit and more particularly an interrupt control mechanism and a corresponding method.

### BACKGROUND OF THE INVENTION

Applications or functionalities are often controlled by central processing units (CPUs) such as microcontrollers or microprocessors. Many applications only require a specific functionality or control task to be performed for a very short time. If not used the CPU enters into a sleep mode or inactive mode to reduce power consumption of the CPU to a minimum. The CPU can then be woken up by an interrupt signal (interrupt) to control or serve a functional stage linked with the interrupt. A functional stage linked with the interrupt means can generate the interrupt itself or can perform the necessary steps required when an interrupt is received by the CPU.

An interrupt generally relates to a specific event, which can be that a specific amount of time has expired or that some data arrived at an interface or various other events. Many different interrupts are typically used for microcontroller or microprocessor based applications. The interrupts are routed by an interrupt controller, which manages and organizes plural interrupts for all kinds of events before they are transferred to the CPU. Once the interrupt is received, the CPU executes a specific subroutine (software program code). The start address of this specific subroutine is determined by an address pointer or a look-up table associated with the interrupt.

Some of these subroutines need hardware functional blocks to perform a specific functionality. For example, the CPU may be required to read in a digital value from an analog-to-digital (ADC) converter responsive to an interrupt. Before this can be done, the ADC must be switched on. This may require several reference stages to be powered on or other related stages to settle before the ADC can be used. Further, the ADC may also need some time (conversion time) before valid digital output is available. The CPU is active and consuming power during the time needed to settle the ADC. Both the power consumed to power up the ADC and the power consumed by the CPU contribute to the overall power consumption. In prior art solutions, the CPU must be activated to qualify the interrupt and to switch on the ADC. Thus the CPU can not be switched off. Some prior art solutions minimize the settling time of the functional stage by speeding up the settling behavior. This often increases the power consumption.

England D, "A µWatt Postage Stamp PC", ASIC Conference 1998, Proceedings, Eleventh Annual IEEE International Rochester, NY, USA 13-16 Sept 1998, IEEE US, 13 Sept 1998, pages 139-143, describes a microprocessor system with power management features, including a special UART that can wake up from a sleep mode without waking the CPU.

### SUMMARY OF THE INVENTION

It is an object of the present invention to provide an electronic device including a CPU with reduced power consumption.

Accordingly, the present invention provides an electronic device including a CPU configured to be switched from a first mode into a second mode in response to an interrupt received from an interrupt generating stage. An interrupt relay is coupled between the interrupt generator and the CPU. A functional stage is coupled to the interrupt relay and functionally linked with the interrupt to be used during the second mode of the CPU. The interrupt relay relays the received interrupt to the CPU only after a time needed for the functional stage to settle. In the present context, settling means that the functional stage provides a specific functionality or enters into a specific internal activation state. Generally, the CPU consumes less power in the first mode (which is a sleep inactive mode) than in the second, active mode. The interrupt is not immediately routed to the interrupt controller, but is logically qualified or evaluated before being routed. Only after the functional stage becomes available by activating, settling or entering into a specific state, does the interrupt relay route the interrupt to the CPU and become valid. No power is used by the CPU while waiting for the functional stage to become available. This reduces the power consumed by the device.

The interrupt relay sends a wake up signal to the functional stage after receipt of the interrupt. This means the CPU does not have wake up to wake up the functional stage. The functional stage transmits a release signal to the interrupt relay to indicate that it has settled and is available. The interrupt relay relays the received interrupt only after receipt of the release signal. The CPU wakes up only after the functional stage has settled. Power can be saved by not waking up the CPU during the settling time of the functional stage.

The functional stage may be any analog or digital module such as a reference voltage generator, an analog-to-digital converter or a digital interface controller. This device may be used for any complex analog or digital functionality, for example communications interfaces, which regularly poll for some information or regularly send data. Regular in this context is used to describe a specific use, however, the device can also be used where it is required to have single or multiple regular or irregular requests of a functionality.

This invention also provides a method of managing an interrupt used to switch a CPU from a first mode into a second mode. The method comprises receiving an interrupt before the interrupt arrives at the CPU, waking up a functional stage in response to the received interrupt, waiting until the functional stage has settled into a predetermined state and relaying the interrupt to the CPU after the waiting step for switching the CPU from the first mode into the second mode. A received interrupt is not routed to the CPU, but is used to wake up the functional stage. After a time for the functional stage to settle, the interrupt is then routed to the CPU. Thus the CPU is switched from the first mode into the second mode only after the functional stage has settled into its predetermined state. This provides considerable reduction in power consumption compared to prior art.

The method according to the present invention can be used for single or multiple requests of functionality. When only a single request is made, the step of generating the interrupt takes place once per event. However, for multiple requests, the interrupt is generated multiple times. When the signal is generated multiple times, the interrupt can either be generated periodically or irregularly. However, at least some of the interrupts are handled by the interrupt relay as described.

### BRIEF DESCRIPTION OF THE DRAWINGS

These and other aspects of this invention are illustrated in the drawings, in which:
Figure 1 is a simplified schematic block diagram of an electronic device according to the invention;
Figure 2 is a timing diagram of the ON and OFF states of the CPU and functional stage according to a prior art device, and the power consumed by the device versus time;
Figure 3 is a timing diagram of the ON and OFF states of the CPU and functional stage in the device according to the invention and the power consumed by the device versus against time; and
Figure 4 is a timing diagram for a second embodiment of this invention.

### DETAILED DESCRIPTION OF PREFERRED EMBODIMENTS

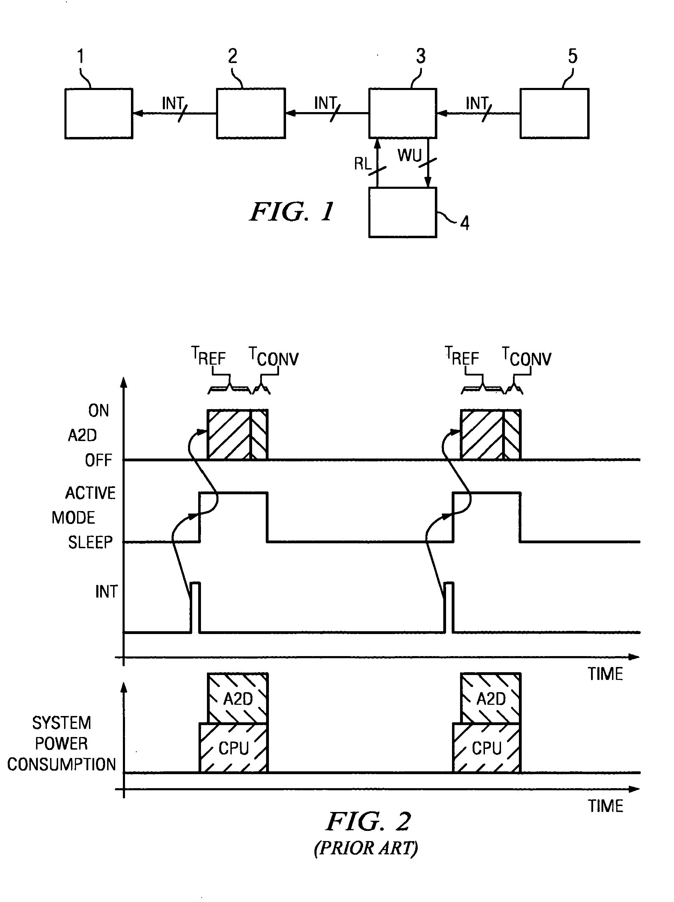

Figure 1 illustrates a simplified schematic block diagram of an electronic device according to the invention. CPU 1 is coupled to an interrupt controller 2, from which receives interrupts. Interrupt controller 2 is coupled to interrupt relay 3. Interrupt relay 3 is coupled to a functional stage 4. Interrupt generator 5 generates an interrupt INT for input to interrupt relay 3. Interrupt generator 5 is representative for any device, stage or block that can generate an interrupt in response to an event. Functional stage 4 is functionally linked with the interrupt INT and is used during an active mode of CPU 1.

Functional stage 4 can be an analog voltage reference, an analog device, a complex digital system, such as a communications system, or a further control circuit. CPU 1 can be a standard microcontroller or a microprocessor.

Interrupt relay 3 receives an interrupt INT from interrupt generator 5. Interrupt relay 3 then sends a wake up signal WU to functional stage 4. Wake up signal WU switches on functional stage 4. Functional stage 4 does not settle into its predetermined functional state right away and takes some time to settle. This time is known as the reference settling time t_{ref}. For example, if functional stage 4 is a reference voltage generator this settling time is the time required for the reference voltage to become stable. If functional stage 4 is an analog-to-digital converter the settling time is the time required for the functional stage to be ready for conversion. After the time t_{ref}, functional stage 4 stabilizes into its predetermined functional state and transmits a release signal RL to interrupt relay 3 indicating that functional stage 4 has settled. Interrupt relay 3 relays the interrupt INT to interrupt controller 2 in response to the release signal RL. Interrupt controller 2 routes the interrupt INT to the CPU 1. This switches CPU 1 so that it wakes up from an inactive or sleep mode to an active or wake mode. However, the interrupt can also be used to switch CPU 1 between any two defined modes such as a first and a second mode), or to jump to a specific point in a program or subroutine. As long as the second mode requires more power of CPU 1 than the first mode, power savings are achieved with the present invention. Functional stage 4 is then used for a time t_{conv} during the active mode of CPU 1. After time t_{conv} when the functionality of functional stage 4 is no longer required, functional stage 4 is switched off or disabled and CPU 1 enters its inactive mode again. This process is repeated as often as the functionality is required, either periodically or randomly.

Figure 2 is a timing diagram illustrating: the ON and OFF states of functional stage 4 (A2D), CPU 1 and interrupt generator 5 (INT) versus time according to a prior art device; and the power consumed by the device versus time. Interrupt generator 5 generates an almost instantaneous signal. In accordance with the prior art, this interrupt turns functional stage 4 ON. Functional stage 4 requires time t_{ref} to settle. Functional stage 4 requires an additional time t_{conv} to perform useful work, in this example an analog-to-digital conversion. In accordance with the prior art, CPU 1 also switches from sleep mode to active mode upon the interrupt. Thus CPU 1 is in active mode during both intervals time t_{ref} and time t_{conv}. At least during time t_{ref} CPU 1 can do no useful work because it is waiting for functional stage 4 which is not ready. Thus the prior art consumes power unnecessarily.

This invention dramatically reduces the total system power consumption in the device. Power consumption may be more than halved compared with the power consumed by a prior art device. As noted above in conjunction with Figure 2, CPU 1 consumes the maximum amount of power during the time t_{ref} as and during the time t_{conv}, because CPU 1 is switched ON at the same time that functional stage 4 is enabled and remains active during the settling time t_{ref} of functional stage 4. The power consumed by the CPU in a prior art device during time t_{ref} is wasted because functional stage 4 cannot perform any useful function during this time while it still settling. However, CPU 1 is still consuming power during this time even though it is not required to be awake then.

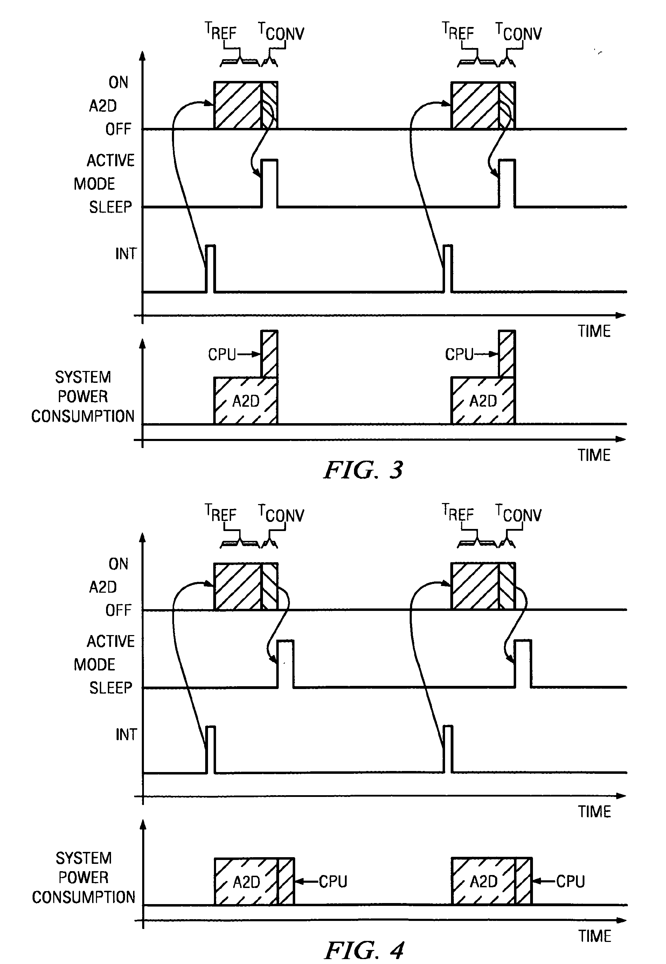

Figure 3 schematically shows from top to bottom: the relative ON and OFF states of functional stage 4 (A2D), CPU 1 and interrupt generator 5 (INT) versus time; and the overall system power consumption of the device according to this invention. Interrupt generator 5 generates an almost instantaneous signal. The falling edge of the interrupt causes interrupt relay 3 to transmit wake up signal WU to wake up functional stage 4. Functional stage 4 then takes time t_{ref} following enablement to settle. Functional stage 4 then transmits release signal RL to interrupt relay 3. Interrupt relay 3 gates the interrupt to CPU 1 via interrupt controller 2. Thus CPU 1 is enabled and enters its active mode, controlling the functional stage 4 to operate. In this example functional stage 4 is an analog-to-digital converter. Thus functional stage 4 performs the analog to digital conversion for the time t_{conv}. At the end of the time t_{conv}, functional stage 4 finishes performing its function. At the same time, CPU 1 enters its inactive mode again.

Thus the system does not start to consume power until the time at which the falling edge of the interrupt occurs at the start of t_{ref}. During the reference settling time t_{ref} while functional stage 4 is still settling, only functional stage 4 is consuming power. Because the CPU 1 is in sleep mode during t_{ref}, it does not consume any power during this time. Only after t_{ref} does CPU 1 start to consume power for the time t_{conv}.

In this invention CPU noise is dramatically reduced compared to prior art devices. This is because the CPU is in an inactive mode for a longer time. No switching of the internal logic occurs in the CPU during the time the CPU is inactive. Thus no current peaks appear on the power supply rails and substrate noise in an integrated device embodying this invention is minimized.

Figure 4 is similar to Figure 3, illustrating another aspect of the invention. In this configuration, CPU 1 is activated only after operation of functional stage 4 completes. In this example functional stage 4 is an analog-to-digital converter and this operation is the conversion of the ADC. A special advantage of the timing shown in Figure 4 is that the maximum system power consumption (peak power consumption) is smaller than for the embodiment illustrated in Figure 3. Thus noise is further reduced and the maximum current capability of the power supply is smaller.

## Claims

1. An electronic device, comprising:
an interrupt generator (5) operable to generate an interrupt (INT);
a CPU (1) configured to be switched from a first mode into a second mode in response to an interrupt (INT) wherein the first mode of the CPU (1) consumes less electric power than the second mode of the CPU (1);
a functional stage (4) functionally linked with the interrupt (INT) operable to process data to be used during the second mode of the CPU (1);
an interrupt relay (3) coupled to the interrupt generator (5), CPU (1) and functional stage (4), **characterized by**
the interrupt relay (3) configured to relay a received interrupt (INT) to CPU (1) only after a time interval needed for the functional stage (4) to settle into a predetermined state.

2. The electronic device according to claim 1, wherein:
the interrupt relay (3) is adapted to send a wake up signal (WU) to the functional stage (4) after reception of the interrupt (INT); and
the functional stage (4) is responsive to a wake up signal (WU) to switch ON.

3. The electronic device according to claim 1 or 2, wherein:
the functional stage (4) transmits a release signal (RL) to the interrupt relay (3) indicating that the functional stage (4) has settled; and
the interrupt relay (3) relays the received interrupt (INT) to the CPU (1) only after reception of the release signal (RL).

4. The electronic device according to any one of claims 1 to 3, wherein:
the functional stage (4) is a reference voltage generator.

5. The electronic device according to claim 4, wherein:
the time interval of the interrupt relay (3) is a time interval needed for the reference voltage generator to settle into an output reference voltage.

6. The electronic device according to any one of claims 1 to 3, wherein:
the functional stage (4) is an analog-to-digital converter.

7. The electronic device according to claim 6, wherein:
the time interval of the interrupt relay (3) is a time interval needed for the analog-to-digital converter to settle into an output reference voltage.

8. The electronic device according to claim 6, wherein:
the time interval of the interrupt relay (3) is a time interval needed for the analog-to-digital converter to perform a conversion.

9. The electronic device according to any one of claims 1 to 3, wherein:
the functional stage (4) is a digital interface controller.

10. A method of managing an interrupt used to switch a CPU from a first mode into a second mode wherein the first mode of the CPU (1) consumes less electric power than the second mode of the CPU (1), the method comprising:
receiving an interrupt from an interrupt source;
waking up a functional stage in response to a received interrupt;
waiting until the functional stage has settled into a predetermined state; and **characterized by**
After the waiting step, relaying, by an interrupt relay,
the interrupt to the CPU for switching the CPU from the first mode into the second mode.

## Patentansprüche

1. Elektronisches Gerät, mit:
einem Interrupt-Generator (5), der so betrieben werden kann, dass er einen Interrupt (INT) erzeugt,
einer CPU (1), die so konfiguriert ist, dass sie als Reaktion auf einen Interrupt (INT) von einer ersten Betriebsart in eine zweite Betriebsart umgeschaltet wird, wobei die erste Betriebsart der CPU (1) weniger elektrischen Strom als die zweite Betriebsart der CPU (1) verbraucht,
einer Funktionsstufe (4), die funktionsmäßig mit dem Interrupt (INT) verbunden ist und so betrieben werden kann, dass sie während der zweiten Betriebsart der CPU (1) zu verwendende Daten verarbeitet,
einem mit dem Interrupt-Generator (5), der CPU (1) und der Funktionsstufe (4) gekoppelten Interrupt-Relais (3), **dadurch gekennzeichnet, dass**
das Interrupt-Relais (3) so konfiguriert ist, dass es einen empfangenen Interrupt (INT) erst nach einem Zeitraum, den die Funktionsstufe (4) zum Einschwingen in einen vorbestimmten Zustand benötigt, an die CPU (1) weiterleitet.

2. Elektronisches Gerät gemäß Anspruch 1, bei dem:
das Interrupt-Relais (3) so eingerichtet ist, dass es nach Empfangen des Interrupts (INT) ein Aufwecksignal (WU) an die Funktionsstufe (4) sendet, und
die Funktionsstufe (4) so auf ein Aufwecksignal (WU) anspricht, dass sie sich einschaltet.

3. Elektronisches Gerät gemäß Anspruch 1 oder 2, bei dem:
die Funktionsstufe (4) ein Freigabesignal (RL) an das Interrupt-Relais (3) sendet, das anzeigt, dass sich die Funktionsstufe (4) eingeschwungen hat, und
das Interrupt-Relais (3) den empfangenen Interrupt (INT) erst nach Empfang des Freigabesignals (RL) an die CPU (1) weiterleitet.

4. Elektronisches Gerät gemäß einem der Ansprüche 1 bis 3, bei dem:
die Funktionsstufe (4) ein Referenzspannungsgenerator ist.

5. Elektronisches Gerät gemäß Anspruch 4, bei dem:
der Zeitraum des Interrupt-Relais (3) ein Zeitraum ist, den der Referenzspannungsgenerator zum Einschwingen auf eine Ausgangsreferenzspannung benötigt.

6. Elektronisches Gerät gemäß einem der Ansprüche 1 bis 3, bei dem:
die Funktionsstufe (4) ein Analog-Digital-Wandler ist.

7. Elektronisches Gerät gemäß Anspruch 6, bei dem:
der Zeitraum des Interrupt-Relais (3) ein Zeitraum ist, den der Analog-Digital-Wandler zum Einschwingen auf eine Ausgangsreferenzspannung benötigt.

8. Elektronisches Gerät gemäß Anspruch 6, bei dem:
der Zeitraum des Interrupt-Relais (3) ein Zeitraum ist, den der Analog-Digital-Wandler zur Durchführung einer Umwandlung benötigt.

9. Elektronisches Gerät gemäß einem der Ansprüche 1 bis 3, bei dem:
die Funktionsstufe (4) eine digitale Schnittstellensteuereinheit ist.

10. Verfahren zur Verwaltung eines zur Umschaltung einer CPU von einer ersten Betriebsart in eine zweite Betriebsart verwendeten Interrupts, wobei die erste Betriebsart der CPU (1) weniger elektrischen Strom als die zweite Betriebsart der CPU (1) verbraucht, wobei das Verfahren umfasst:
Empfangen eines Interrupts von einer Interrupt-Quelle,
Aufwecken einer Funktionsstufe als Reaktion auf einen empfangenen Interrupt,
Warten, bis sich die Funktionsstufe in einem vorbestimmten Zustand eingeschwungen hat, und **dadurch gekennzeichnet, dass**
nach dem Schritt des Abwartens der Interrupt über ein Interrupt-Relais an die CPU weitergeleitet wird, zur Umschaltung der CPU von der ersten Betriebsart in die zweite Betriebsart.

## Revendications

1. Dispositif électronique, comprenant :
un générateur d'interruption (5) pouvant être utilisé pour générer une interruption (INT) ;
une CPU (1) configurée pour être commutée d'un premier mode dans un deuxième mode en réponse à une interruption (INT), dans lequel le premier mode de la CPU (1) consomme moins d'énergie électrique que le deuxième mode de la CPU (1) ;
un étage fonctionnel (4) relié fonctionnellement à l'interruption (INT) pouvant être utilisé pour traiter des données à utiliser dans le deuxième mode de la CPU (1) ;
un relais d'interruption (3) couplé au générateur d'interruption (5), à la CPU (1) et à l'étage fonctionnel (4), **caractérisé en ce que**
le relais d'interruption (3) est configuré pour ne relayer une interruption (INT) reçue vers la CPU (1) qu'après un intervalle de temps nécessaire pour que l'étage fonctionnel (4) se stabilise dans un état prédéterminé.

2. Dispositif électronique selon la revendication 1, dans lequel :
le relais d'interruption (3) est conçu pour envoyer un signal de réveil (WU) à l'étage fonctionnel (4) après la réception de l'interruption (INT) ; et
l'étage fonctionnel (4) s'active en réponse à un signal de réveil (WU).

3. Dispositif électronique selon la revendication 1 ou 2, dans lequel :
l'étage fonctionnel (4) transmet un signal de libération (RL) au relais d'interruption (3) indiquant que l'étage fonctionnel (4) s'est stabilisé ; et
le relais d'interruption (3) ne relaye l'interruption (INT) reçue vers la CPU (1) qu'après la réception du signal de libération (RL).

4. Dispositif électronique selon l'une quelconque des revendications 1 à 3, dans lequel :
l'étage fonctionnel (4) est un générateur de tension de référence.

5. Dispositif électronique selon la revendication 4, dans lequel :
l'intervalle de temps du relais d'interruption (3) est un intervalle de temps nécessaire pour que le générateur de tension de référence se stabilise à une tension de référence de sortie.

6. Dispositif électronique selon l'une quelconque des revendications 1 à 3, dans lequel :
l'étage fonctionnel (4) est un convertisseur analogique-numérique.

7. Dispositif électronique selon la revendication 6, dans lequel :
l'intervalle de temps du relais d'interruption (3) est un intervalle de temps nécessaire pour que le convertisseur analogique-numérique se stabilise à une tension de référence de sortie.

8. Dispositif électronique selon la revendication 6, dans lequel :
l'intervalle de temps du relais d'interruption (3) est un intervalle de temps nécessaire pour que le convertisseur analogique-numérique effectue une conversion.

9. Dispositif électronique selon l'une quelconque des revendications 1 à 3, dans lequel :
l'étage fonctionnel (4) est un contrôleur d'interface numérique.

10. Procédé de gestion d'une interruption utilisée pour commuter une CPU d'un premier mode dans un deuxième mode, dans lequel le premier mode de la CPU (1) consomme moins d'énergie électrique que le deuxième mode de la CPU (1), le procédé comprend :
recevoir une interruption d'une source d'interruption ;
réveiller un étage fonctionnel en réponse à une interruption reçue ;
attendre jusqu'à ce que l'étage fonctionnel se soit stabilisé dans un état prédéterminé ;
et **caractérisé par**
après l'étape d'attente, l'étape de relais, par un relais d'interruption, l'interruption vers la CPU pour commuter la CPU du premier mode dans le deuxième mode.
